# EUROPEAN PATENT SPECIFICATION

(11) **EP 1 643 078 B1**
(45) Date of publication and mention of the grant of the patent: **09.01.2008**
(21) Application number: 05027373.9
(22) Date of filing: 26.02.2002
(51) Int. Cl.: E21B 7/24, F16F 1/32

(54) **Sonic drill head**
Schallbohrkopf
Tête de forage sonique

(30) Priority: 26.02.2001 US 271459 P
(43) Date of publication of application: 05.04.2006
(62) Divisional of application: 02709719.5
(73) Proprietor: Diedrich Drill, Inc., LaPorte, IN 46350 (US)
(72) Inventor: Smith, Brian, LaPorte, IN 46350 (US); Lange, James E., LaPorte, IN 46350 (US)
(74) Representative: Klunker . Schmitt-Nilson . Hirsch

(56) References cited:
- US-A- 2 743 585
- US-A- 2 867 984
- US-A- 3 190 369
- US-A- 3 393 571
- US-A- 3 402 611
- US-A- 3 467 207
- US-A- 3 786 874
- US-A- 5 409 070

## Description

This invention relates to a sonic or sine generator drilling head for use on a drill rig.

Soil samples may be taken by at least two methods: drilling and by directly driving samplers into the earth. Sonic drilling is a method of driving a sampler in which vibratory energy is applied to the drill rod. This technique is particularly effective when the vibrations coincide with the natural resonant frequency of the drill rod or casing, because the effective force generated at the bit face is significantly multiplied. The vibrational force causes soil particles along the side of the drill to fluidize or break apart from the surrounding ground. The term "sonic drilling" stems from the fact that the frequency of vibrations normally used is in the 50-200 Hertz range, which is within the lower range of audible sound that can be detected by the human ear. In addition to earth probing, vibrational force can be used to facilitate installation of other objects into the ground.

Various techniques are available for providing the vibrational force necessary for sonic drilling. One method is a direct-drive vibration machine.

An example of a sonic drill utilizing a direct-drive mechanical vibration or brute force mechanism is shown in U.S. Patent Nos. 5,027,908 and 5,409,070 both to R. Roussy. The Roussy design features a motor connected to and driving a horizontal shaft through a pair of splined gears. The shaft is connected to a crank by means of a second shaft having ball ends with splined connections. A pair of the cranks drive offset counter rotating rollers. Each roller is housed in a cylindrical cavity. The offset rollers provide a cam movement to the following cylindrical cavities resulting in a vibrational up-and-down motion of vertical shafts and the drill string.

Another sonic drill utilizing a direct-drive mechanical vibration mechanism is shown in U.s. Patent No. 5,549,170 to Barrow*.* The *Barrow* design discloses a sine generator drill head including an outer housing and a spindle having a first axis. The spindle is mounted to the housing for rotational and vibrational movement. The drill head has two rollers that are mounted off center to respective bores, which serve as bearing races. The rollers impart vibrational movement upon the spindle. The type of mechanisms shown in the patents to *Roussy* and *Barrow* may cause maintenance and/or premature failure problems due to the vibrational force from the offset rollers rolling in the bores. It is, therefore, an object of the present invention to provide an improved sonic drilling head for imparting vibrational movement upon the drill spindle.

U.S. Patent No. 3,467,207 to Pyles et al. discloses a universal drilling machine. The drilling machine in Pyles et al. has a sine generator drill head including an outer housing and a spindle having an axis. The sine generator drill head also has a first motor that drives a vibratory mechanism for providing vibratory movement to the spindle, and a second motor for providing rotational movement to the spindle. The vibratory mechanism includes a plurality of eccentric masses that are drivingly engaged with one another and that rotate in opposite directions.

U.S. Patent No. 3,190,369 to Pyle discloses a rotary percussion rock drilling apparatus. The rock drilling apparatus includes first and second motors and rotating eccentric masses that rotate in opposite directions as driven by a set of gears.

According to one embodiment of the present invention, four eccentric masses are rotatably mounted in a sine generator housing, with each of the masses offset from an adjacent mass by 90°, so that the four eccentric masses are on mutually perpendicular intersecting axes, which also intersect the axis of the spindle. A spiral bevel gear drives two of the eccentric masses through gear teeth on the masses, and the driven masses drive the other two masses through corresponding gear teeth. The spiral bevel gear is rotated by a drive shaft which connects the spiral bevel gear to a speed increaser assembly mounted on the outer housing. The drive shaft allows for parallel, axial, and angular misalignment with respect to the spiral bevel gear and the speed increaser assembly, which is driven by a drive motor. In one embodiment, the drive shaft is connected to the spiral bevel gear and to a speed increaser pinion through splined connections and is biased vertically by a pack of disc springs, to preload upper and lower retainers mating with spherical surfaces of an end of the shaft. The spindle is rotated by a separate rotary drive motor, which drives a drive gear connected to the sine generator housing. The rotary drive motor is mounted to an outer housing and separated from the sign generator assembly by a pack of precision disc springs. Another set of precision disc springs are mounted between the drilling spindle and another bearing that is supported by the housing. Together, these packs of precision disc springs isolate the drive mechanisms and the outer housing from the vibrations of the sine generator.

These and other features of the present invention will become apparent from the following description, with reference to the accompanying drawings, in which:
Figure 1 is a front view of the sonic drill head showing a lubrication pump on the left of the housing, a rotary spindle drive motor at the upper right of the housing, and a sonic drive motor at the top of the housing.
Figure 2 is a side view of the sonic drill head of the present invention shown from the side where the lubrication pump is mounted.
Figure 3 is a longitudinal cross sectional view taken along line 3-3 of Figure 2 of one embodiment of a sonic drill head made pursuant to the teachings of the present invention.
Figure 4 is an enlarged version of the upper part of the sonic drill head of Figure 3, illustrating in detail the drive between the sonic drive motor and a spiral bevel gear.
Figure 5 is a transverse cross sectional view taken substantially along lines 5-5 of Figure 3, showing 2 pairs of eccentric members and illustrated with each eccentric member having a two part configuration.
Figure 6 is an exploded perspective view of an alternate embodiment sonic drive shaft having a circumferential groove through the lower splines along with a bushing having a spherical seat, a split ring bushing, and a snap ring.
Figure 7 is a longitudinal cross sectional view taken similar to the view in Figure 3 of a another embodiment of a sonic drill head made pursuant to the teachings of the present invention.
Figure 8 is a longitudinal cross sectional view of the sonic drill head of Figure 7 having the sine generator and spindle removed.
Figure 9 is a longitudinal cross sectional view of the sine generator and spindle of Figure 7 removed from the sonic drill head.
Figure 10 is a close up cross sectional view of the mounting of the drive shaft of the embodiment in Figure 7 to a pinion.
Figure 11 is a top sectional view taken along line 11-11 of Figure 9 of the drive shaft drive balls located in gothic archways.
Figure 11a is a close up view of one drive ball taken as shown in Figure 11 located in the gothic archway.
Figure 12 is a top perspective view of the disc springs used in the embodiment of Figure 7.
Figure 12A is a side view of the disc springs of Figure 12.
Figure 13 is a close up cross sectional view of the lower portion of the outer housing and spindle support taken as shown in Figure 8.

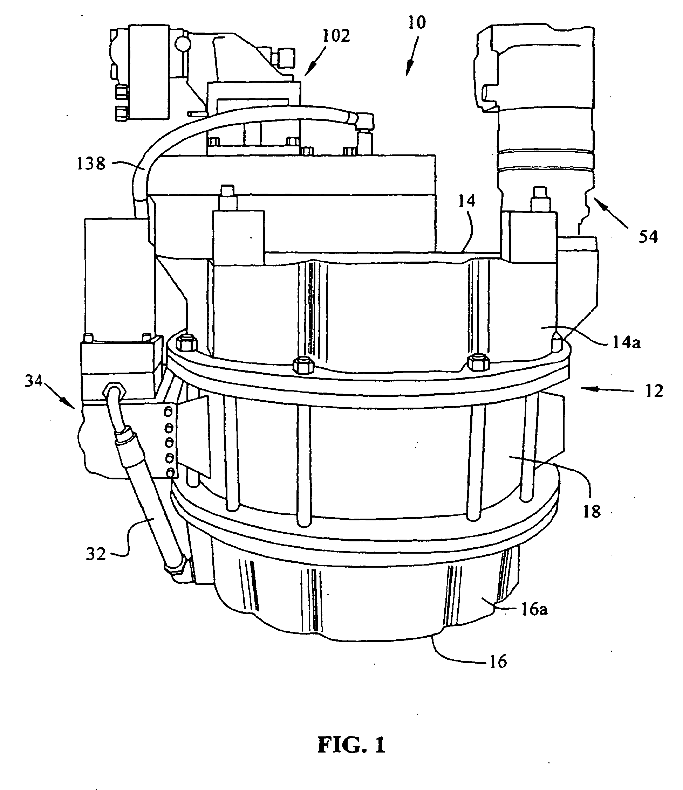

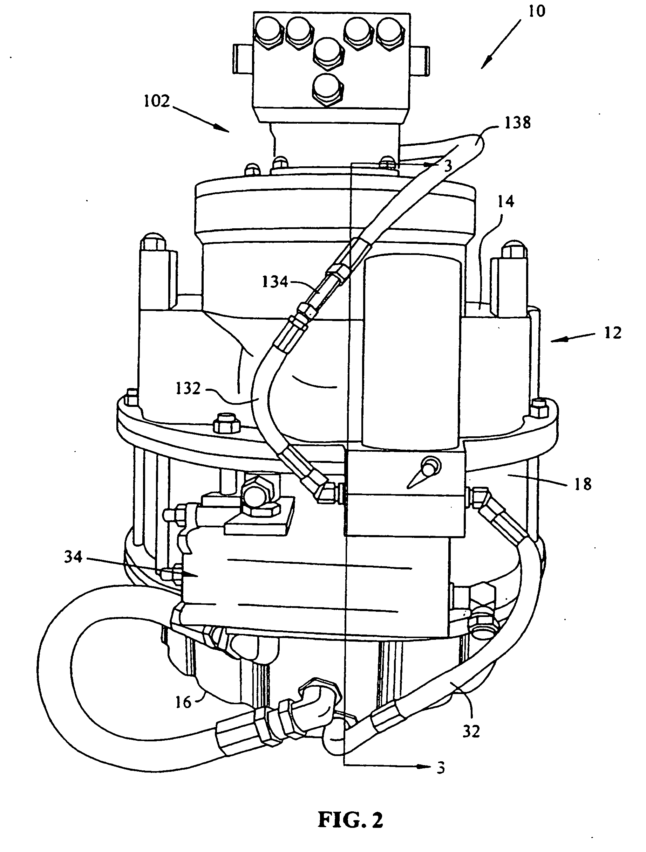

Referring now to the Figures 1-5, a sonic drill head generally indicated by the numeral 10 includes an outer housing 12 which is adapted to be installed on a feed frame (not shown) of a conventional drill rig (not shown). The feed frame, as is well known to those skilled in the art, is adapted to be raised for drilling to a vertical or angular position and lowered for travel of the sonic drill head 10. In one embodiment the rig is provided with a torque generating rotary actuator (not shown) for rotating sonic drill head 10 to a horizontal position when the actuator is charged with hydraulic fluid. For safety purposes, it is best that this system include fail safe brakes that will lock the rotation of the unit in the event pressure is lost in the hydraulic fluid.

Outer housing 12 includes an upper end wall or cap 14, a lower end wall or cap 16, and a circumferentially extending side wall 18 which interconnects the upper end wall 14 and lower end wall 16. As can be seen, end walls 14 and 16 include circumferentially extending sidewall wall portions 14a and 16a, respectively. End walls 14, 16 and side wall 18 define an inner cavity 20 within outer housing 12. A spindle support 22 extends from the lower end wall 16 into inner cavity 20. Spindle support 22 carries a circumferentially extending hydrodynamic guide or sliding bushing 26, which supports a spindle generally indicated as 30 and permits rotation and axial displacement thereof. Pressurized hydraulic fluid can flow to sliding bushing 26 through a hydraulic fining (not shown), which receives the fluid through an internal fluid line 31 and an external fluid line 32 that are interconnected by a fitting 33 located in a bore through lower end wall 16. The hydraulic fluid is pressurized and circulated by a lubrication pump 34 mounted to the exterior of outer housing 12. The spindle 30 extends through an aperture 36 in lower end wall 16 and terminates in an end 38, which carries drill rod adaptors (not shown), which are used to connect a drill rod to end 38 of spindle 30. The term "drill rod" is used in the generic sense, and may include any type of earth samplers or other ground penetrating objects. A seal 41 and bracket 42 around lower end 38 of spindle 30 are mounted to lower end wall 16 by bolts (not show) threaded in apertures 44.

Spindle 30 is supported for rotation within outer housing 12 by a lower bearing 46 and is bolted to a sine generator housing 84. In one embodiment, bearings 46 and an upper bearing 48 are four point contact bearings, and include inner races 46a, 48a, outer races 46b, 48b, and roller bearing elements 46c, 48c, respectively. Inner race 46a of lower bearing 46 is supported directly on lower end wall 16. Precision disc springs 50, having individual discs 50a, 50b, and 50c and which are well known and also sometimes referred to as Belleville spring washers, extend between a flange 51 mounted to outer race 46b of lower bearing 46 and a circumferentially extending shoulder 52 on spindle 30. Axial alignment of disc springs 50 may be maintained by a retaining ring 53 located adjacent discs 50a, 50b. Accordingly, disc springs 50 not only support spindle 30 for rotation with respect to outer housing 12 via the four point contact bearings 46, but also isolate the vibratory motion of spindle 30.

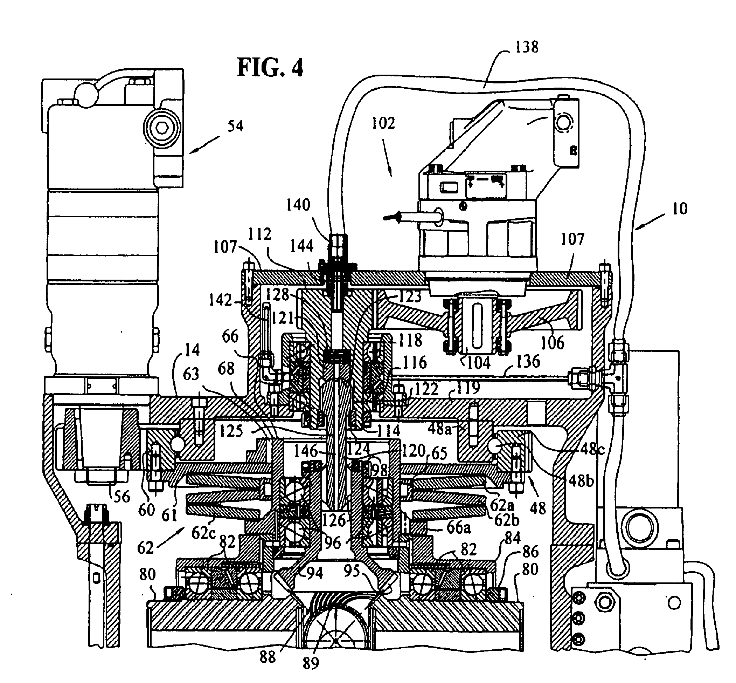

Spindle 30 is rotated by a rotary drive motor generally indicated by the numeral 54. Rotary drive motor 54 may be, for example, a hydraulic drive motor of a type well known to those skilled in the art. Rotary drive motor 54 is mounted on outer housing 12 and includes an output shaft 56. A pinion 58 is mounted on output shaft 56. Pinion 58 drives a gear 60, which is formed on or attached to outer race 48b. A collar 61 is mounted to outer race 48b. Collar 61 is used to preload and laterally position a second pack of disc springs 62 having individual discs 62a, 62b, and 62c. Also, attached to collar 61 is a spline 63. Disc springs 62 extend between a lower shoulder 64 of collar 61 and a shoulder 66a of a coupling 66. Like disc springs 50, disc springs 62 consist of resilient members and axial alignment may be maintained by an upper retaining ring 65 located at the inner diameter of discs 62a, 62b (Figure 4). Rotation of spindle 30 is accomplished by transmission of motion from pinion 58 through gear 60, which in turn rotates spline 63. Spline 63 engages splines 68 formed on or attached to the outside diameter of coupling 66. Disc springs 50 and 62 are able to expand and contract axially to isolate the vibrations of a vibratory generator generally indicated by 69 and spindle 30. It should be noted that disc springs 50 and 62 are compressively preloaded so that a compression load is maintained on the springs throughout the full vibratory cycle of the unit.

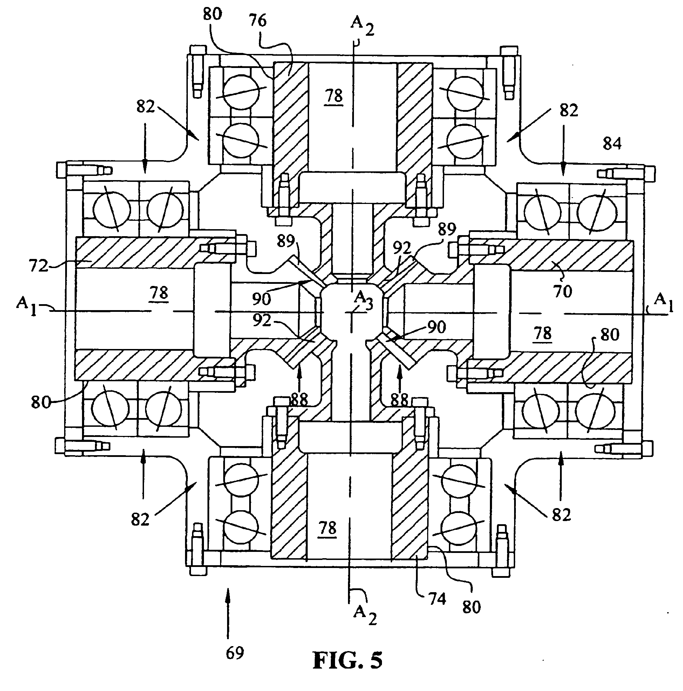

Vibratory force is applied to spindle 30 by sine or vibratory wave motion generator 69. The terms "sine" and "vibratory" are used interchangeably herein. Sine wave generator 69 includes a first pair of eccentric or unevenly balanced masses 70, 72 (Figure 5) and a second pair of eccentric masses or unevenly balanced masses 74, 76. In the embodiment shown, each of masses 70-76 has a through bore 78, which is formed off-center to provide unbalance in the masses. Each of the masses also includes an outer circumferential surface 80 which is journaled for rotation by bearings 82 that are mounted in bearing caps 83 of the sine generator housing 84 to support the masses 70-76. In one embodiment, bearings 82 are super precision class bearings of the angular contact ball type. The outer races of bearings 82 are held in position by bearing caps 83, and inner races are preloaded by locknuts 86 threaded onto the outer circumferential surface 80 of masses 70-76. Accordingly, masses 70-76 are journaled for rotation relative to bearing caps 83 by bearings 82. As best shown in Figure 5, it will be noted that masses 70 and 72 are coaxial A₁, and masses 74, 76 rotate about a common axis A₂ which intersects with and is mutually perpendicular to the axis of rotation A₁ of masses 70 and 72. These axes are also mutually perpendicular to and intersect an axis A₃ of the spindle.

Masses 70 and 72 each include a conical face 88 at one end thereof which carry teeth 89 which extend along the entire length of conical face 88. Masses 74 and 76 each include a conical face 90, which are shorter than conical faces 88 and carry correspondingly shorter teeth 92. Shorter teeth 92 mesh with those portions of teeth 89 closest to the axis of spindle 30. A spiral bevel gear 94 includes teeth 95 meshing with those portions of teeth 89 that are radially outward from the axis A₃ of spindle 30. Spiral bevel gear 94 is journaled for rotation by bearings 96 which are supported on cap or coupling 66. The outer race of bearings 96 is held in place by a lip 97 on the inside diameter of coupling 66, and the inner race is secured by a bearing retainer locknut 98 threaded onto the outside diameter of spiral bevel gear 94. Accordingly, rotation of spiral bevel gear 94 causes rotation of the masses 70 and 72 relative to spindle 30, which in turn cause rotation of masses 74 and 76 through teeth 89 and 92. The sine generator housing 84 has lubrication jets (not shown) in the upper and bottom thereof directing oil on the gear teeth of the eccentric masses. The four eccentric masses caps 83 are bolted (not shown) to sine generator housing 84 and have lubrication channels to lubricate the bearings.

Spiral bevel gear 94 is driven by a drive motor generally indicated by the numeral 102. In one embodiment, drive motor 102 is a hydraulic motor driven by the drill rig hydraulic system (not shown) and includes an output shaft 104 which drives a gear 106. Drive motor 102 is mounted to a cap 107 that closes off the top of upper end wall 14. The gear 106 drives gear or pinion 112 having a hub 114 that is supported by bearings 116, which are in turn supported by bearing housing or cap 118 that is mounted to an internal wall 119 of upper end wall 14. The larger gear 106 acts as a speed increaser to gear 112.

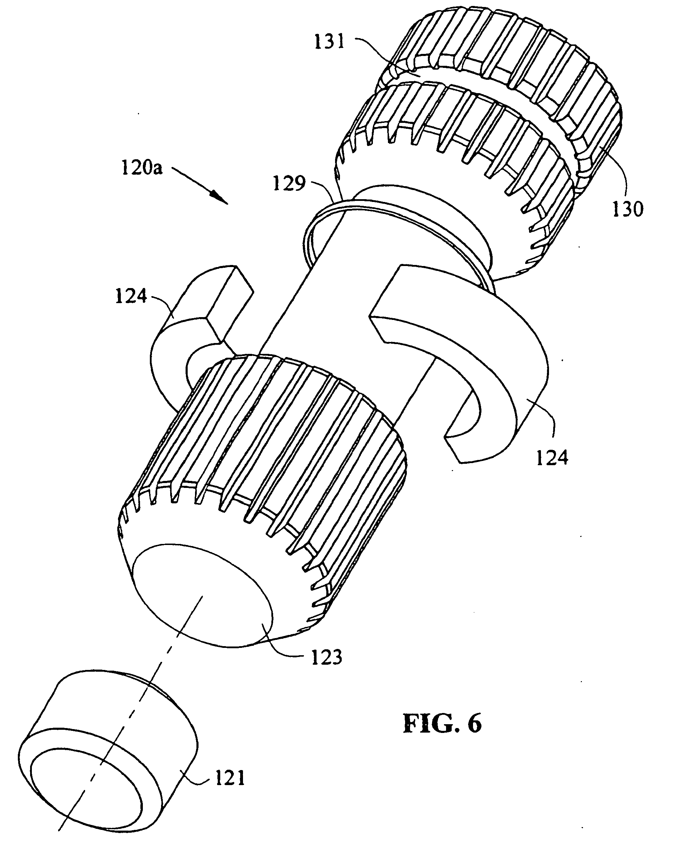

One end of a drive shaft 120 extends into hub 114 and is connected thereto by a splined connection 122, so that the drive shaft 120 is driven by gear 112. The top of drive shaft 120 is rounded and bears against a bushing 121 having a spherical seat 123 for accepting the upper rounded end of drive shaft 120. A split ring bushing 124 having an inner diameter smaller than the upper end of drive shaft 120 maintains drive shaft 120 and splined connection 122 as shown. Split ring bushing 124 also has a spherical seat contacting drive shaft 120 below splined connection 122. Springs 128 are mounted above bushing 121 in hub 114 to preload the drive shaft and to limit and cushion upward movement of drive shaft 120. Springs 128 are preferably a pack of spring washers/disc springs. A snap ring 129 is best shown with an alternate embodiment drive shaft 120a in Figure 6. Snap ring 129 fits into a groove (not shown) on the internal diameter of hub 114 and holds the pack of disc springs 128 under a constant compressive force. The internal diameter of split ring bushing 124 is larger than the mid-diameter 125 of drive shaft 120 so that the drive shaft may tilt slightly about its vertical axis to allow for misalignment. The opposite end of drive shaft 120 is connected to spiral bevel gear 94 through a lower splined connection 126. In the alternate embodiment of Figure 6, drive shaft 120a includes lower splines 130, which have a circumferential groove 131 cut therethrough to enhance lubrication of connection 126.

Lubrication for bearings 116 and splined connections 122 and 126 is provided by lubrication pump 34. It is important to the proper operation of the sonic drill unit that proper lubrication be maintained, and that the discharge of lubrication pump 34 be prevented from going dry. In one embodiment shown, the output section of the combination lubrication pump/motor is approximately 15%-25% times larger than the input section to help preclude a fill up condition in housing 12. From lubrication pump 34, a lubricating fluid is pumped through line a 132 into a T-fining 134. From T-fitting 134 the fluid is split and part of it is pumped through a line 136 for lubricating bearings 116, and the remainder of the fluid is pumped through a line 138 into a fitting 140 mounted at the top of cap 107. The meshing of gear 106 with gear 112 is lubricated by a hydraulic fitting 142 which receives lubricating fluid through line 136 and sprays the fluid on the splines of the gears. Fluid communicated through the line 138 is passed to the internal portion of gear 112 to lubricate splined connection 122 through a rotary fluid union 144 as is well known in the art. A portion of the fluid is also transmitted by a through bore 146 to lubricate lower splined connection 126. Through a line 32, lubrication pump 34 provides lubrication to the lower bearings and hydrodynamic guide 26. It should be noted that the other bearings and drive connections in sonic drill head 10 are lubricated through a series of internal ports, which receive fluid from lubrication pump 34 through the above-mentioned lines. In a typical application, the lubrication will be retrieved from the bottom of outer housing 12 and pumped through a line (not shown) to a drill rig (not shown) where it will be filtered and returned to lubrication pump 34 for redistribution throughout sonic drill head 10.

In operation, the output of drive motor 102 is transmitted through gears 106, 112 and drive shaft 120 to rotate spiral bevel gear 94. Since spiral bevel gear 94 is engaged with masses 70 and 72, rotation of spiral bevel gear 94 also rotates masses 70 and 72. Since masses 70 and 72 are connected with masses 74 and 76, masses 74 and 76 will also be rotated, but in a direction opposite to that of masses 70 and 72. It will be noted that spiral bevel gear 94 does not directly engage masses 74 and 76. Accordingly, the masses are counter rotating and rotate relative to bearing caps 83, thereby setting up a reaction type vibration system. The amplitude of the vibrations and their frequency are a function of several factors including the mass and eccentricity of masses 70-76, and the speed at which the masses are driven. In any event, vibrations are transmitted through spindle 30 to the drill rod and bits (not shown) penetrating the ground. With the above described assembly and operation, gears 106 and 112 and drive motor 102 are isolated from the vibrations. Similarly, disc springs 50 and 62 isolate gear 60 and rotary drive motor 54 from vibrations of the spindle.

As the spindle is vibrated by operation of drive motor 102, rotation of the spindle is effected by operation of rotary drive motor 54 and its connection with the spindle through the geared outer bearing race 48b. Rotary motion from drive motor 54 is transferred through pinion 58 to outer bearing race 48b, which in turn rotates collar 61 attached thereto. Collar 61 rotates coupling 66 through a splined connection. Coupling 66 is connected to and rotates sine generator housing 84, which is connected to and rotates spindle 30. Disc springs 50 and 62 are preloaded by collar 61 which is attached to bearing 48 and provides a resilient connection/coupling and isolate the housing, rotary drive motor 54 and the remaining components from the vibratory motion of the sine generator. Rotation of spindle 30 rotates cutter heads (not shown).

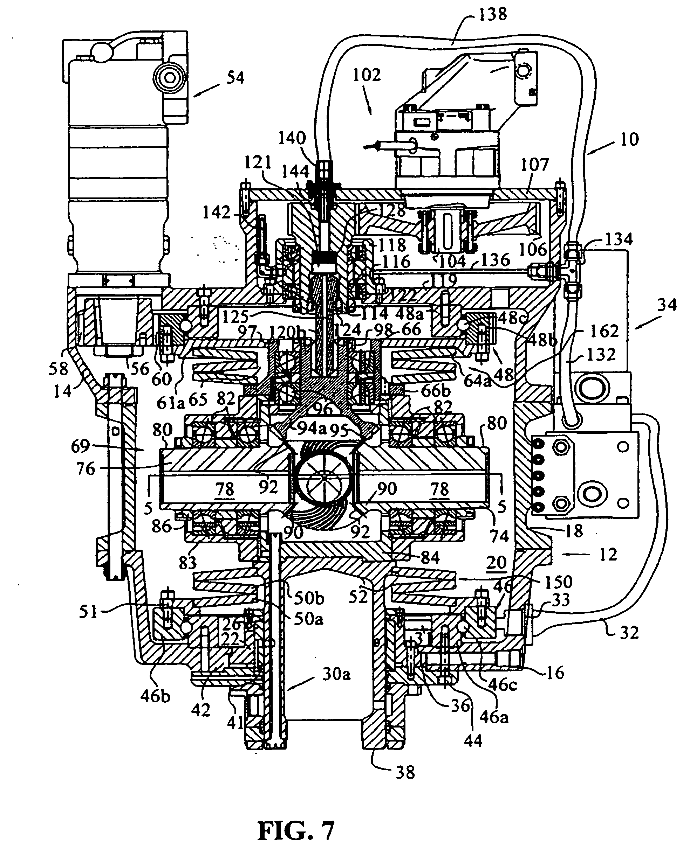

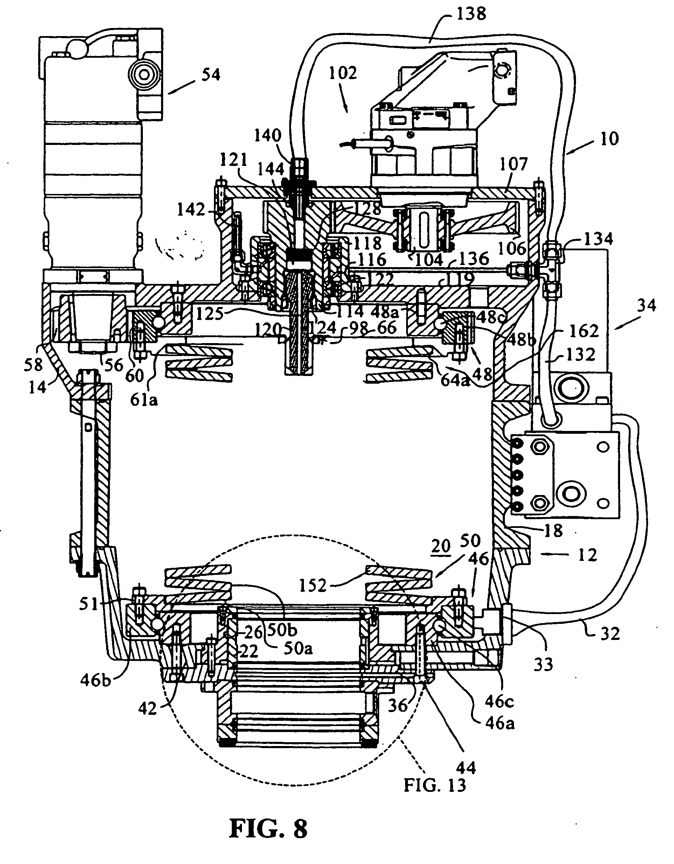

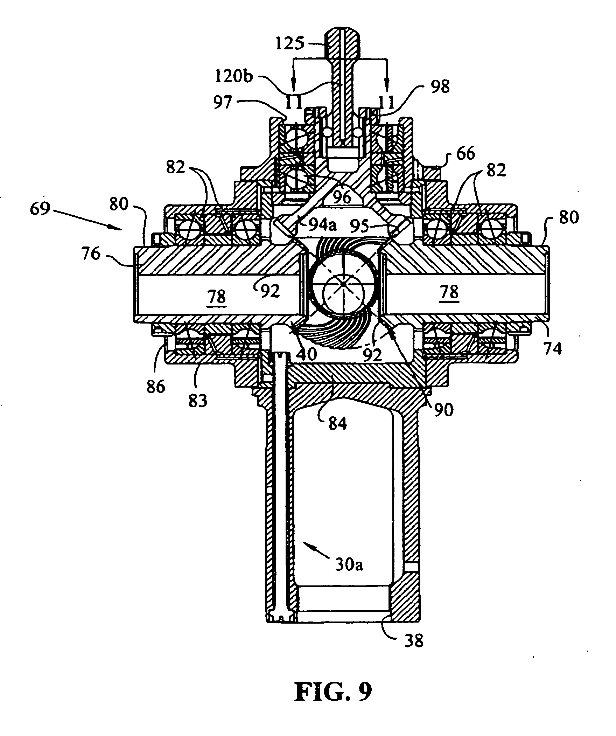

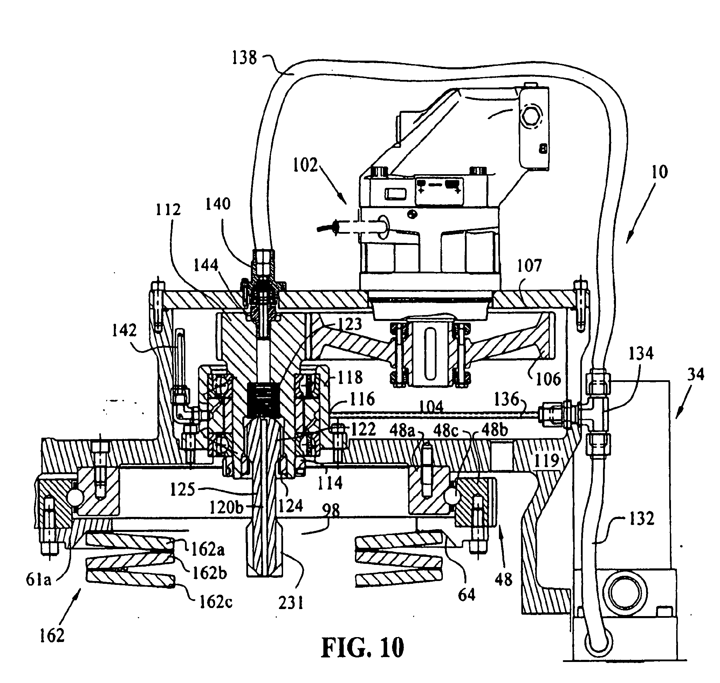

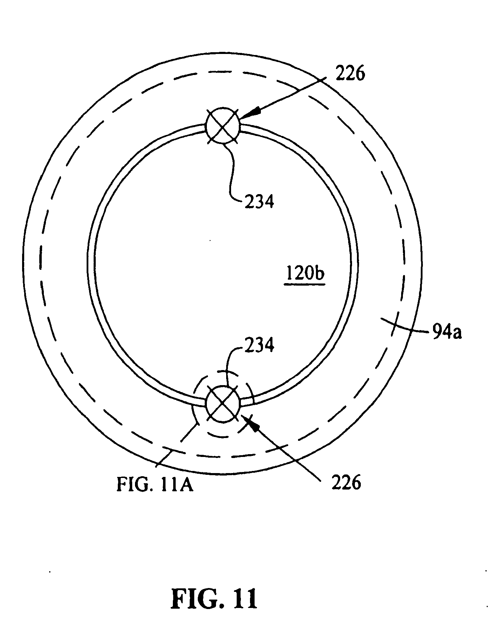

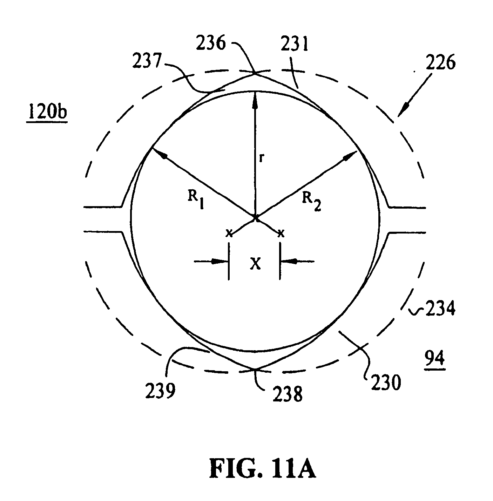

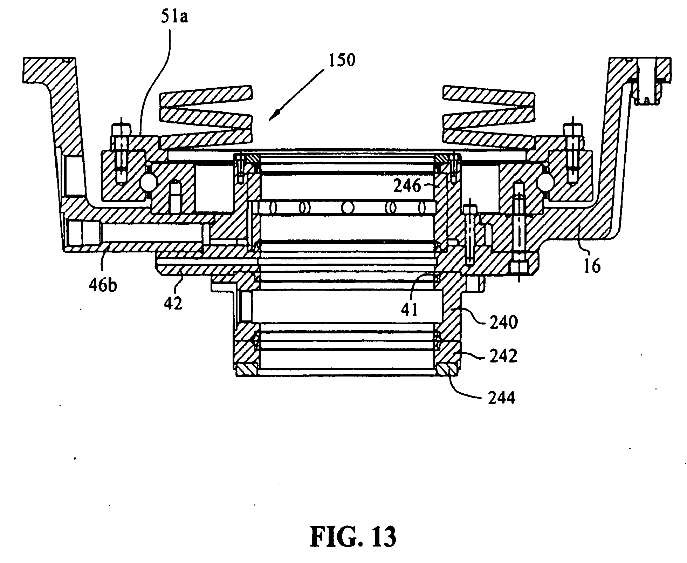

In Figures 7-13, an alternate drive system is shown for sonic drill head 10. This embodiment includes an alternate drive shaft 120b utilizing a ball and race drive connection to 226 in lieu of a splined connection. As best shown in Figures 10, 11 and 11A, drive shaft 120b includes a pair of gothic archway shaped raceways 231, and alternate spiral bevel gear 94a likewise includes a pair of gothic arch-shaped raceways 230. Gothic raceways 230, 231 extend generally parallel to the axis of spindle 30, and each side of drive connection 226 carries a ball bearing 234 which transmits the drive motion from drive shaft 120b to spiral bevel gear 94a. As can be seen in Figure 11A, the gothic archways are formed along intersecting circles having radii R1, R2 with offset centers, x1, x2, respectively. The intersecting circles form an apex 236 in drive shaft 120b and an apex 238 in spiral bevel gear 94a. This gothic arch raceway configuration will result in a small gap 237 between ball bearing 234 and apex 236 of drive shaft 120b and a gap 239 between ball bearing 234 and apex 236 of spiral bevel gear 94a. This type of raceway configuration tends to produce 2-point contact between ball bearing 234 and the raceways in each of the drive shaft and spiral bevel gear. It should be noted that this ball and raceway drive connection facilitates relative axial, parallel, and angular misalignment between drive shaft 120b and spiral bevel gear 94a. Ball bearings 234 can move up and down in raceways 230, 231; however, downward movement of ball bearings 234 is limited as the raceways are constricted towards the bottom of drive shaft 120b.

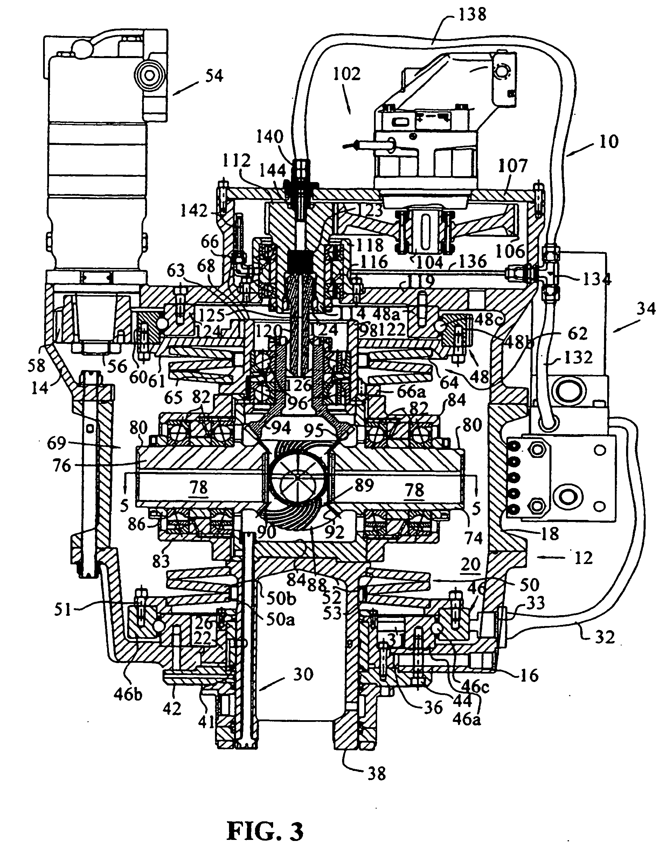

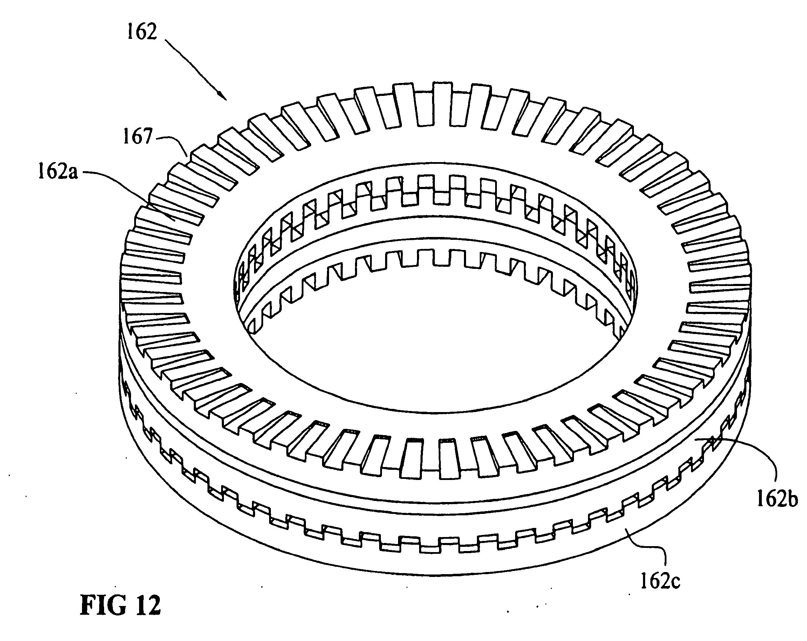

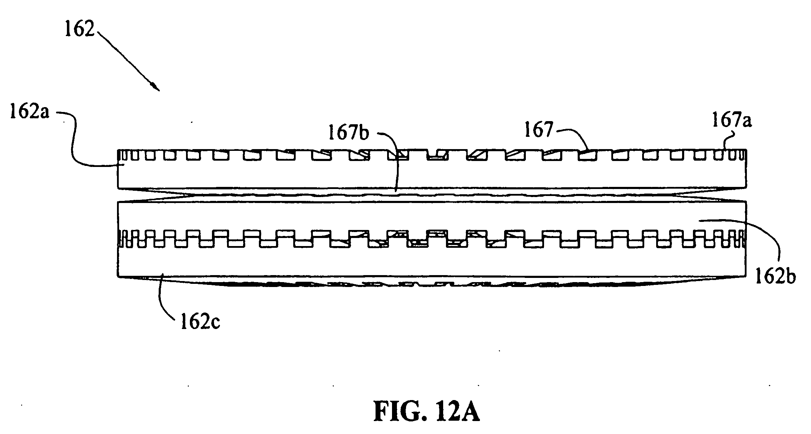

In the embodiment shown in Figures 7-13, of sonic drill head 10, an alternate rotary drive connection for rotating spindle 30 is also shown. In this embodiment, collar 61 is not connected to coupling 66 with a splined connection. Rather, an alternate collar 61a is used having serrations on lower shoulder 64a. These serrations are drivingly engaged with serrations 167 on disc springs 162 having individual discs 162a, 162b, and 162c. As shown in Figures 12 and 12a, rotary drive motion is transmitted From collar 61a through serrations 167 and disc springs 162 to coupling 66b. As with the embodiment shown in Figures 3 and 4, rotary motion from coupling 66b is transmitted to a spindle 30a through the sine generator housing 84.

Facilitating the rotation of spindle 30a, is a hydraulic fluid guide or bushing 246 and a water swivel or jacket 240 located outside of outer housing 12. A collar 242 is connected to water cooling bushing 240 and a snubber or bumper 244 is located on the bottom of collar 242 to prevent over stroke of the spindle.

While the invention has been disclosed with specific reference to the above embodiments, someone skilled in the art will recognize that changes can be made in form and detail without departing from the spirit and scope of the invention. For instance, as shown in Figure 7, an alternate embodiment drive shaft 120A may be utilized. It has an external groove through the lower splines for distributing lubricating fluid thereto. Also, although the embodiment shown utilizes four eccentric masses, other numbers of eccentric masses may be used. It should also be realized that other means may be available to provide reactionary-type vibrations provided by the masses. For instance, instead of using off-center bores, the masses may be made with weights on one side to provide an imbalance, or may be made from two or more materials having different densities to provide an uneven weight distribution about the axis of rotation. Also, in Figure 5, the eccentric masses are shown with a two part construction with an eccentric mass portion bolted to the gear teeth portion, but each mass may also be formed from one solid piece.

Furthermore, other types of springs or bearings may be utilized without departing from the scope of the invention. In addition, it would be possible to vary the types of gears used, and the particular gearing arrangements discussed. The described embodiments, therefore, are to be considered in all respects only as illustrative and not restrictive. The scope of the invention is, therefore, limited only by the appended claims.

## Claims

1. A sine generator drill head (41) comprising an outer housing (12), a spindle (30) having an axis, a first motor (102) driving a vibratory mechanism (69) for providing vibratory movement to said spindle, and a second motor (54) for providing rotational movement to said spindle, said vibratory mechanism including at least two rotating eccentric masses (70, 74) wherein one of said rotating masses (70) is drivingly engaged with the other of said masses (74) to rotate it in an opposite direction, the drill head **characterized by** at least one resilient member (50,62) preloaded under a compressive force, wherein said resilient member forms part of a resilient connection (50. 62) between said spindle and said housing permitting vibrational movement of the spindle relative to the housing and isolating said second motor (54) and said outer housing (12) from vibratory movement of said vibratory mechanism (69).

2. A sine generator drill head as claimed in claim 1, including at least four eccentric masses, wherein a first pair (70, 72) of coaxial eccentric masses are mounted in a sine generator housing (84) and rotatable about a second axis, and a second pair (74, 76) of coaxial eccentric masses are mounted in said sine generator housing and rotatable about a third axis, said first and second pair of eccentric masses imparting said vibrational movement upon said spindle along said first axis.

3. A sine generator drill head as claimed in claim 2, wherein said motor (102) rotates said first pair of eccentric masses in one direction which rotate said second pair of eccentric masses in the opposite direction.

4. A sine generator drill head as claimed in either claim 2 or 3, wherein said first, second, and third axes intersect.

5. A sine generator drill head as claimed in any one of claims 2-4, wherein said first, second, and third axes are perpendicular to one another and the spindle vibrates along the first axis.

6. A sine generator drill head as claimed in any one of claims 1-5, further including gear teeth (89) on one of said eccentric masses engaging gear teeth (92) on another of said eccentric masses, whereby rotation of said one eccentric mass causes rotation of said another eccentric mass.

7. A sine generator drill head as claimed in any one of claims 2-6, wherein said first pair of eccentric masses and said second pair of eccentric masses rotate in opposite directions.

8. A sine generator drill head as claimed in either claim 6 or 7, further including a first gear (94) engaging said teeth on at least one of said eccentric masses.

9. A sine generator drill head as claimed in claim 8. wherein said first gear is a spiral bevel gear.

10. A sine generator drill head as claimed in either claim 8 or 9. wherein said motor (102) drives said first gear.

11. A sine generator drill head as claimed in claim 10, further including a second gear (106) connected to said motor, a third gear (112) engaging the second gear, and a drive shaft (120) connecting said first and third gears which allows for parallel, axial and angular misalignment.

12. A sine generator drill head as claimed in claim 11, further including springs (128) mounted above said drive shaft to preload said drive shaft and limit movement thereof.

13. A sine generator drill head as claimed in either claim 11 or 12, wherein said drive shaft is drivingly connected to said first gear with a ball (234) and raceway (230, 231) connection (226).

14. A sine generator drill head as claimed in claim 13, wherein said raceway has a cross-section in the configuration of a gothic arch and said drive shaft is removed from direct contact with said first gear.

15. A sine generator drill head as claimed in any one of claims 1-14, wherein said second motor (54) is connected to a geared bearing race (48b), said geared bearing race forming a part of a rotational drive system for providing said rotational movement to said spindle.

16. A sine generator drill head as claimed in claim 15, wherein said spindle is movable along its vertical axis relative to said geared bearing race.

17. A sine generator drill head as claimed in claim 1, wherein said resilient member is a disc spring.

18. A sine generator drill head as claimed in claim 17, wherein a collar (61 a) is connected to said geared bearing race, said collar having a surface with radially aligned serrations, and said disc spring also has a surface having radially aligned serrations (167), said serrations of said collar drivingly engaging said serrations on said disc spring to transmit rotational movement from said gear bearing race to said disc spring.

19. A sine generator drill head as claimed in claim 18, further including at least one other disc spring, said first disc spring having a second surface on the side of said first disc spring opposite said first surface, said second surface also including radially aligned serrations, and said other disc spring having a surface with radially aligned serrations, said serrations on the second side of said first disc spring drivingly engaging said serrations on said surface of said other disc spring to transmit rotational movement from said first disc spring to said other disc spring and to provide alignment between said disc springs.

20. A sine generator drill head as claimed in claim 1, including a first gear (94) drivingly engaging said masses; and a drive shaft (120) driven by said first motor and drivingly engaging said first gear while permitting axial movement of said drive shaft relative to said first gear when said drive shaft is driving said first gear.

21. A sine generator drill head as claimed in claim 20, wherein said first motor drives a second gear (112) axially offset from said first gear, said drive shaft being connected to said first gear by a first splined connection or a ball drive and to said second gear by a second splined connection whereby said drive shaft is permitted to tilt axially relative to both said first and said second gear when the masses are being driven.

22. A sine generator drill head as claimed in either claim 20 or 21, wherein said drive shaft includes opposite ends, and a spring mechanism (128) is mounted above said drive shaft to provide a preload thereon and to limit movement thereof with respect to said second gear.

23. A sine generator drill head as claimed in any one of claims 20-22, wherein said drive shaft is seated in a bushing (121) having a spherical seat, and a split bushing (124) having a spherical seat supports said drive shaft beneath said second splined connection.

24. A sine generator drill head as claimed in claim 23, wherein said split bushing is held by a snap ring (129) fitted into a groove in said second gear.

## Patentansprüche

1. Sinusgenerator-Bohrkopf (41) aufweisend ein äußeres Gehäuse (12), eine Welle (30) mit einer Achse, einen ersten Motor (102), der einen Vibrationsmechanismus (69) antreibt, um eine Vibrationsbewegung an die Welle bereitzustellen, und einen zweiten Motor (54) zur Bereitstellung einer rotatorischen Bewegung an die Welle, wobei der Vibrationsmechanismus wenigstens zwei rotierende exzentrische Massen (70, 74) beinhaltet, wobei eine der rotierenden Massen (70) antriebsmäßig mit der anderen der Massen (74) in Eingriff steht, um sie in eine entgegengesetzte Richtung zu rotieren, wobei der Bohrkopf **gekennzeichnet ist durch** wenigstens ein nachgiebiges Element (50, 62), das unter Einfluss einer zusammenpressenden Kraft vorgespannt ist, wobei das nachgiebige Element einen Teil einer nachgiebigen Verbindung (50, 62) zwischen der Welle und dem Gehäuse bildet und eine vibratorische Bewegung der Welle relativ zu dem Gehäuse ermöglicht und den zweiten Motor (54) und das äußere Gehäuse (12) gegenüber vibratorischer Bewegung des Vibrationsmechanismus (69) isoliert.

2. Sinusgenerator-Bohrkopf nach Anspruch 1, beinhaltend wenigstens vier exzentrische Massen, wobei ein erstes Paar (70, 72) von koaxialen exzentrischen Massen in einem Sinusgeneratorgehäuse (84) angebracht ist und um eine zweite Achse rotierbar ist, und ein zweites Paar (74, 76) von koaxialen exzentrischen Massen in dem Sinusgeneratorgehäuse angebracht ist und um eine dritte Achse rotierbar ist, wobei das erste und zweite Paar von exzentrischen Massen die vibratorische Bewegung auf die Welle entlang der ersten Achse übertragen.

3. Sinusgenerator-Bohrkopf nach Anspruch 2, wobei der Motor (102) das erste Paar von exzentrischen Massen in einer Richtung rotiert, welche das zweite Paar von exzentrischen Massen in die entgegengesetzte Richtung rotiert.

4. Sinusgenerator-Bohrkopf nach einem der Ansprüche 2 oder 3, wobei sich die erste, zweite und dritte Achse schneiden.

5. Sinusgenerator-Bohrkopf nach einem der Ansprüche 2 bis 4, wobei die erste, zweite und dritte Achse zueinander senkrecht sind und die Welle entlang der ersten Achse vibriert.

6. Sinusgenerator-Bohrkopf nach einem der Ansprüche 1 bis 5, weiter beinhaltend Zahnradzacken (89) auf einer der exzentrischen Massen, die mit Zahnradzacken (92) auf einer anderen der exzentrischen Massen in Eingriff stehen, wodurch Rotation der einen exzentrischen Masse eine Rotation der anderen exzentrischen Masse verursacht.

7. Sinusgenerator-Bohrkopf nach einem der Ansprüche 2 bis 6, wobei das erste Paar von exzentrischen Massen und das zweite Paar von exzentrischen Massen in entgegengesetzten Richtungen rotieren.

8. Sinusgenerator-Bohrkopf nach Anspruch 6 oder 7, weiterhin beinhaltend ein erstes Zahnrad (94), das mit den Zähnen auf wenigstens einer der exzentrischen Massen in Eingriff steht.

9. Sinusgenerator-Bohrkopf nach Anspruch 8, wobei das erste Zahnrad ein Schrägzahn-Kegelrad ist.

10. Sinusgenerator-Bohrkopf nach Anspruch 8 oder 9, wobei der Motor (102) das erste Zahnrad antreibt.

11. Sinusgenerator-Bohrkopf nach Anspruch 10, weiterhin beinhaltend ein zweites Zahnrad (106), das mit dem Motor verbunden ist, ein drittes Zahnrad (112), das mit dem zweiten Zahnrad in Eingriff steht, und eine Antriebswelle (120), welche das erste und dritte Zahnrad verbindet und welche eine parallele, axiale und winkelförmige Fehlausrichtung ermöglicht.

12. Sinusgenerator-Bohrkopf nach Anspruch 11, weiterhin beinhaltend Federn (128), die über der Antriebswelle angebracht sind, um die Antriebswelle vorzuspannen und eine Bewegung derselben zu limitieren.

13. Sinusgenerator-Bohrkopf nach Anspruch 11 oder 12, wobei die Antriebswelle antriebsmäßig mit dem ersten Zahnrad über eine Kugel (234)- und Laufbahn (230, 231)-Verbindung (226) verbunden ist.

14. Sinusgenerator-Bohrkopf nach Anspruch 13, wobei die Laufbahn einen Querschnitt in der Konfiguration eines gotischen Bogenstücks aufweist und die Antriebswelle von einem direkten Kontakt mit dem ersten Zahnrad abgesetzt ist.

15. Sinusgenerator-Bohrkopf nach einem der Ansprüche 1 bis 14, wobei der zweite Motor (54) mit einem verzahnten Lagerlaufring (48b) verbunden ist, wobei der verzahnte Lagerlaufring einen Teil eines rotatorischen Antriebssystems bildet zur Bereitstellung der Rotationsbewegung an die Welle.

16. Sinusgenerator-Bohrkopf nach Anspruch 15, wobei die Welle entlang ihrer vertikalen Achse relativ zu dem verzahnten Lagerlaufring bewegbar ist.

17. Sinusgenerator-Bohrkopf nach Anspruch 1, wobei das nachgiebige Element eine Tellerfeder ist.

18. Sinusgenerator-Bohrkopf nach Anspruch 17, wobei ein Kragen (61a) mit dem verzahnten Lagerlaufring verbunden ist, wobei der Kragen eine Oberfläche mit radial ausgerichteten Rippen aufweist, und die Tellerfeder ebenso eine Oberfläche mit radial ausgerichteten Rippen (167) aufweist, wobei die Rippen des Kragens antriebsmäßig mit den Rippen auf der Tellerfeder in Eingriff stehen, um eine Rotationsbewegung von dem verzahnten Lagerlaufring auf die Tellerfeder zu übertragen.

19. Sinusgenerator-Bohrkopf nach Anspruch 18, weiterhin beinhaltend wenigstens eine andere Tellerfeder, wobei die erste Tellerfeder eine zweite Oberfläche auf der Seite der ersten Tellerfeder gegenüberliegend zu der ersten Oberfläche aufweist, wobei die zweite Oberfläche ebenfalls radial ausgerichtete Rippen beinhaltet, und wobei die andere Tellerfeder eine Oberfläche mit radial ausgerichteten Rippen aufweist, wobei die Rippen auf der zweiten Seite der ersten Tellerfeder antriebsmäßig mit den Rippen auf der Oberfläche der anderen Tellerfeder in Eingriff stehen, um eine Rotationsbewegung von der ersten Tellerfeder zu der anderen Tellerfeder zu übertragen und um einen Abgleich zwischen den Tellerfedern bereitzustellen.

20. Sinusgenerator-Bohrkopf nach Anspruch 1, beinhaltend ein erstes Zahnrad (94), welches antriebsmäßig mit den Massen in Eingriff steht; und eine Antriebswelle (120), die durch den ersten Motor angetrieben ist, und welche antriebsmäßig mit dem ersten Zahnrad in Eingriff steht, während eine axiale Bewegung der Antriebswelle relativ zu dem ersten Zahnrad ermöglicht wird, wenn die Antriebswelle das erste Zahnrad antreibt.

21. Sinusgenerator-Bohrkopf nach Anspruch 20, wobei der erste Motor ein zweites Zahnrad (112) antreibt, das axial von dem ersten Zahnrad versetzt ist, wobei die Antriebswelle mit dem ersten Zahnrad durch eine erste verkeilende Verbindung oder einen Kugelantrieb und mit dem zweiten Zahnrad durch eine zweite verkeilende Verbindung verbunden ist, wodurch es der Antriebswelle ermöglicht ist, sich axial relativ zu sowohl dem ersten als auch dem zweiten Zahnrad zu neigen, wenn die Massen angetrieben werden.

22. Sinusgenerator-Bohrkopf nach Anspruch 20 oder 21, wobei die Antriebswelle gegenüberliegende Enden beinhaltet, und ein Federmechanismus (128) über der Antriebswelle angebracht ist, um eine Vorspannung auf diese auszuüben und um eine Bewegung desselben bezüglich des zweiten Zahnrads zu begrenzen.

23. Sinusgenerator-Bohrkopf nach einem der Ansprüche 20 bis 22, wobei die Antriebswelle in einer Buchse (121) mit einer sphärischen Aufnahme aufgenommen ist, und eine geteilte Buchse (124) mit einer sphärischen Aufnahme die Antriebswelle unterhalb der zweiten verkeilenden Verbindung stützt.

24. Sinusgenerator-Bohrkopf nach Anspruch 23, wobei die geteilte Buchse durch einen Sprengring (129) gehalten ist, der in eine Vertiefung in dem zweiten Zahnrad eingepasst ist.

## Revendications

1. Tête de forage à générateur d'ondes sinusoïdales (41) comprenant un boîtier externe (12), une broche (30) ayant un axe, un premier moteur (102) entraînant un mécanisme vibrant (69) destiné à assurer un mouvement de vibration de ladite broche, et un second moteur (54) destiné à assurer un mouvement de rotation de ladite broche, ledit mécanisme vibrant comprenant au moins deux masses excentriques rotatives (70, 74), dans laquelle l'une desdites masses rotatives (70) est engagée par entraînement avec l'autre desdites masses (74) de façon à la faire tourner dans une direction opposée, la tête de forage étant **caractérisée par** au moins un élément élastique (50, 62) pré-chargé sous une force de compression, dans laquelle ledit élément élastique fait partie d'un raccord élastique (50, 62) entre ladite broche et ledit logement permettant un mouvement de vibration de la broche par rapport au logement et isolant ledit second moteur (54) et ledit logement externe (12) du mouvement de vibration dudit mécanisme vibrant (69).

2. Tête de forage à générateur d'ondes sinusoïdales selon la revendication 1, comprenant au moins quatre masses excentriques, dans laquelle une première paire (70, 72) de masses excentriques coaxiales est montée dans un logement de générateur d'ondes sinusoïdales (84) et peut tourner autour d'un second axe, et une seconde paire (74, 76) de masses excentriques coaxiales est montée dans ledit logement de générateur d'ondes sinusoïdales et peut tourner autour d'un troisième axe, lesdites première et seconde paires de masses excentriques transmettant ledit mouvement de vibration à ladite broche le long dudit premier axe.

3. Tête de forage à générateur d'ondes sinusoïdales selon la revendication 2, dans laquelle ledit moteur (102) fait tourner ladite première paire de masses excentriques dans une direction qui fait tourner ladite seconde paire de masses excentriques dans la direction opposée.

4. Tête de forage à générateur d'ondes sinusoïdales selon la revendication 2 ou 3, dans laquelle lesdits premier, second et troisièmes axes se croisent.

5. Tête de forage à générateur d'ondes sinusoïdales selon l'une quelconque des revendications 2 à 4, dans laquelle lesdits premier, second et troisième axes sont perpendiculaires les uns aux autres et la broche vibre le long du premier axe.

6. Tête de forage à générateur d'ondes sinusoïdales selon l'une quelconque des revendications 1 à 5, comprenant en outre une denture (89) sur l'une desdites masses excentriques engageant une denture (92) sur une autre desdites masses excentriques, la rotation de ladite masse excentrique provoquant une rotation de ladite autre masse excentrique.

7. Tête de forage à générateur d'ondes sinusoïdales selon l'une quelconque des revendications 2 à 6, dans laquelle ladite première paire de masses excentriques et ladite seconde paire de masses excentriques tournent dans des directions opposées.

8. Tête de forage à générateur d'ondes sinusoïdales selon la revendication 6 ou 7, comprenant en outre une première roue dentée (94) engrenant ladite denture sur au moins l'une desdites masses excentriques.

9. Tête de forage à générateur d'ondes sinusoïdales selon la revendication 8, dans laquelle ladite première roue dentée est une roue conique à denture spirale.

10. Tête de forage à générateur d'ondes sinusoïdales selon la revendication 8 ou 9, dans laquelle ledit moteur (102) entraîne ladite première roue.

11. Tête de forage à générateur d'ondes sinusoïdales selon la revendication 10, comprenant en outre une deuxième roue dentée (106) reliée audit moteur, une troisième roue dentée (112) engrenant avec la seconde roue dentée, et un arbre d'entraînement (120) reliant lesdites première et troisième roues qui permet un désalignement parallèle, axial et angulaire.

12. Tête de forage à générateur d'ondes sinusoïdales selon la revendication 11, comprenant en outre des ressorts (128) montés au-dessus dudit arbre d'entraînement afin de pré-contraindre ledit arbre d'entraînement et de limiter le mouvement de celui-ci.

13. Tête de forage à générateur d'ondes sinusoïdales selon la revendication 11 ou 12, dans laquelle ledit arbre d'entraînement est relié en entraînement à ladite première roue avec une liaison (226) à bille (234) et à chemin de roulement (230, 231).

14. Tête de forage à générateur d'ondes sinusoïdales selon la revendication 13, dans laquelle ledit chemin de roulement possède une section transversale ayant la configuration d'une arche gothique et ledit arbre d'entraînement est retiré de tout contact direct avec ladite première roue.

15. Tête de forage à générateur d'ondes sinusoïdales selon l'une quelconque des revendications 1 à 14, dans laquelle ledit second moteur (54) est relié à une bague de roulement à denture (48b), ladite bague de roulement à denture faisant partie d'un système d'entraînement rotatif destiné à assurer ledit mouvement de rotation de ladite broche.

16. Tête de forage à générateur d'ondes sinusoïdales selon la revendication 15, dans laquelle ladite broche est mobile le long de son axe vertical par rapport à ladite bague de roulement à denture.

17. Tête de forage à générateur d'ondes sinusoïdales selon la revendication 1, dans laquelle ledit élément élastique est un ressort belleville.

18. Tête de forage à générateur d'ondes sinusoïdales selon la revendication 17, dans laquelle un collier (61a) est relié à ladite bague de roulement à denture, ledit collier présentant une surface ayant des cannelures radialement alignées, et ledit ressort belleville possède également une surface ayant des cannelures radialement alignées (167), lesdites cannelures dudit collier engrenant à entraînement avec lesdites cannelures situées sur ledit ressort belleville afin de transmettre le mouvement de rotation entre ladite bague de roulement à denture et ledit ressort belleville

19. Tête de forage à générateur d'ondes sinusoïdales selon la revendication 18, comprenant en outre au moins un autre ressort belleville, ledit premier ressort belleville ayant une seconde surface sur le côté dudit premier ressort belleville opposé à ladite première surface, ladite seconde surface comprenant également des cannelures radialement alignées, et ledit autre ressort belleville ayant une surface ayant des cannelures radialement alignées, lesdites cannelures situées sur le second côté dudit premier ressort belleville engrenant à entraînement avec lesdites cannelures situées sur ladite surface dudit autre ressort belleville afin de transmettre le mouvement de rotation entre ledit premier ressort belleville et ledit autre ressort belleville et d'assurer un alignement entre lesdits ressorts belleville.

20. Tête de forage à générateur d'ondes sinusoïdales selon la revendication 1, comprenant une première roue dentée (94) engrenant à entraînement avec lesdites masses ; et un arbre d'entraînement (120) entraîné par ledit premier moteur et engrenant à entraînement avec ladite première roue dentée tout en permettant un mouvement axial dudit arbre d'entraînement par rapport à ladite première roue lorsque ledit arbre d'entraînement entraîne ladite première roue.

21. Tête de forage à générateur d'ondes sinusoïdales selon la revendication 20, dans laquelle ledit premier moteur entraîne une deuxième roue dentée (112) axialement décalée par rapport à ladite première roue dentée, ledit arbre d'entraînement étant relié à ladite première roue par une première liaison cannelée ou une transmission à billes et à ladite deuxième roue par une seconde liaison cannelée, ledit arbre d'entraînement pouvant s'incliner axialement par rapport auxdites première et deuxième roues lorsque les masses sont entraînées.

22. Tête de forage à générateur d'ondes sinusoïdales selon la revendication 20 ou 21, dans laquelle ledit arbre d'entraînement comprend des extrémités opposées, et un mécanisme à ressort (128) est monté au-dessus dudit arbre d'entraînement afin d'assurer une pré-contrainte dessus et de limiter le mouvement de celui-ci par rapport à ladite deuxième roue.

23. Tête de forage à générateur d'ondes sinusoïdales selon l'une quelconque des revendications 20 à 22, dans laquelle ledit arbre d'entraînement est placé dans une bague de palier (121) ayant un siège sphérique, et une bague fendue (124) ayant un siège sphérique supporte ledit arbre d'entraînement sous ladite seconde liaison cannelée.

24. Tête de forage à générateur d'ondes sinusoïdales selon la revendication 23, dans laquelle ladite bague fendue est maintenue par une bague de retenue (129) placée dans une rainure dans ladite deuxième roue.
